(19)

**Europäisches Patentamt**
**European Patent Office**
**Office européen des brevets**

(11) **EP 3 109 596 A1**

(12) **DEMANDE DE BREVET EUROPEEN**

(43) Date de publication:
**28.12.2016 Bulletin 2016/52**

(51) Int Cl.:
*G01C 23/00* (2006.01)          *B64D 45/04* (2006.01)
*G05D 1/06* (2006.01)

(21) Numéro de dépôt: **16176183.8**

(22) Date de dépôt: **24.06.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **24.06.2015 FR 1501309**

(71) Demandeur: **Dassault Aviation**
**75008 Paris (FR)**

(72) Inventeurs:
• LEPAGE, Sébastien
  92400 COURBEVOIE (FR)
• BAUDSON, Olivier
  92150 SURESNES (FR)
• TURPIN, Arnaud
  92100 BOULOGNE BILLANCOURT (FR)

(74) Mandataire: **Lavoix**
**2, place d'Estienne d'Orves**
**75441 Paris Cedex 09 (FR)**

(54) **SYSTÈME D'AFFICHAGE D'UN AÉRONEF COMPRENANT UN SYMBOLE DE GUIDAGE D'ARRONDI ET PROCÉDÉ ASSOCIÉ**

(57) Système d'affichage d'un aéronef, comprenant :
- un afficheur ;
- un ensemble de génération d'affichage sur l'afficheur, propre à afficher dynamiquement sur l'afficheur au moins une ligne d'horizon (52), une échelle de pente (56) de l'aéronef par rapport à la ligne d'horizon (52) et un symbole de vecteur vitesse (60), représentatif de la pente de l'aéronef par rapport à la ligne d'horizon (52).

L'ensemble de génération d'affichage est propre à afficher, en approche d'une piste d'atterrissage (13), un symbole de guidage d'arrondi (64), la position du symbole de guidage d'arrondi (64) sur l'afficheur dépendant de la pente topographique de la piste d'atterrissage (13) approchée.

FIG.5

EP 3 109 596 A1

**Description**

La présente invention concerne un système d'affichage d'un aéronef, comprenant :

- un afficheur ;
- un ensemble de génération d'affichage sur l'afficheur, propre à afficher dynamiquement sur l'afficheur au moins une ligne d'horizon, une échelle de pente de l'aéronef par rapport à la ligne d'horizon et un symbole de vecteur vitesse, représentatif de la pente de l'aéronef par rapport à la ligne d'horizon.

Un tel système est destiné à être implanté dans le cockpit d'un aéronef pour être associé à un afficheur du cockpit. L'afficheur est par exemple un afficheur au moins partiellement transparent, tel qu'un écran semi transparent placé devant un pare-brise du cockpit, un système de projection d'images sur le pare-brise du cockpit, un pare-soleil semi-transparent, un viseur de casque, ou encore une lunette semi-transparente proche de l'aeil.

En variante, l'afficheur constitue un écran tête basse intégré dans le tableau de bord du cockpit.

Le système d'affichage est destiné à faciliter le pilotage lors de l'atterrissage d'un aéronef sur un terrain non horizontal.

Des systèmes connus d'afficheurs affichent simultanément une ligne d'horizon et un symbole de vecteur vitesse qui permettent au pilote de visualiser facilement la pente de l'aéronef.

Lors de l'atterrissage d'un aéronef, le pilote utilise la ligne d'horizon affichée pour positionner la pente de l'aéronef par rapport à la piste. Il remonte progressivement le symbole de vecteur vitesse par rapport à la ligne d'horizon, lors de la phase d'arrondi, au-dessus de la piste de façon à placer le symbole de vecteur vitesse sous la ligne d'horizon, à une distance déterminée de celle-ci correspondant à une pente cible, par exemple de l'ordre de 1° sous la ligne d'horizon, avant le toucher des roues. Une telle manoeuvre adoucit généralement le toucher de l'aéronef sur la piste, ce qui est favorable à la sécurité et au confort des passagers.

Pour guider le pilote dans le déclenchement et le suivi de la manoeuvre d'arrondi, il est usuel d'afficher, dans la phase finale de l'approche, un symbole de guidage d'arrondi qui se place par exemple sous le vecteur vitesse.

Lorsque l'arrondi doit être démarré, le symbole de guidage d'arrondi change de position et/ou d'apparence, signalant au pilote qu'il serait adéquat de remonter le vecteur vitesse par rapport à la ligne d'horizon pour adoucir le toucher.

Une telle manoeuvre fonctionne sur une piste plate. Cependant, dans certains cas, la piste présente une pente pouvant aller jusqu'à 10°.

Dans le cas où la pente est positive au niveau du seuil de piste, le déclenchement de la manoeuvre d'arrondi par le pilote peut être trop tardif pour compenser l'angle plus grand formé entre le vecteur vitesse et l'axe de la piste. En conséquence, le toucher peut être relativement dur, ce qui nuit au confort des passagers.

À l'inverse, lorsque la pente de la piste est négative, la manoeuvre d'arrondi réalisée par le pilote peut être trop prématurée. L'aéronef se pose donc plus loin sur la piste, ce qui crée un risque de remise des gaz, voire de sortie de piste.

Un but de l'invention est donc d'obtenir un système d'affichage d'aéronef qui permette d'engager un arrondi assurant un toucher confortable pour les passagers, au point désiré, quelle que soit la configuration topographique de la piste d'atterrissage.

À cet effet, l'invention a pour objet un système du type précité, caractérisé en ce que l'ensemble de génération d'affichage est propre à afficher, en approche d'une piste d'atterrissage, un symbole de guidage d'arrondi, la position du symbole de guidage d'arrondi sur l'afficheur dépendant de la pente topographique de la piste d'atterrissage approchée.

Le système selon l'invention peut comprendre l'une ou plusieurs des caractéristiques suivantes, prise(s) isolément ou suivant toute combinaison techniquement possible :

- le symbole de guidage d'arrondi est propre à avertir l'équipage de l'atteinte d'une position de début de manoeuvre d'arrondi, de préférence d'une hauteur de début de manoeuvre d'arrondi, la position de début de manoeuvre d'arrondi étant déterminée en tenant compte de la pente topographique de la piste d'atterrissage ;
- l'ensemble de génération d'affichage comporte une application de calcul de la position de début de manoeuvre d'arrondi, en fonction d'une pente topographique déterminée à partir d'au moins une information topographique issue d'une base de données caractéristique de la piste d'atterrissage ;
- l'application de calcul est propre à interroger une base de données de pistes d'atterrissage, la base de données comprenant au moins une information topographique correspondant à chaque piste d'atterrissage ;
- la base de données comporte une première information topographique d'altitude de seuil de piste, et une deuxième information topographique d'altitude de fin de piste, et une troisième information topographique de longueur de piste, la pente topographique étant déterminée en fonction de la première information topographique, de la deuxième information topographique et de la troisième information topographique ;

- l'ensemble de génération d'affichage est propre à signaler l'atteinte de la position de début de manoeuvre d'arrondi en plaçant le symbole de guidage d'arrondi en coïncidence avec le symbole de vecteur vitesse ;
- avant la position de début de manoeuvre d'arrondi, l'ensemble de génération d'affichage est propre à afficher le symbole de guidage d'arrondi sous le symbole de vecteur vitesse et à le rapprocher verticalement du symbole de vecteur vitesse jusqu'à la position de début d'arrondi ;
- l'ensemble de génération d'affichage est propre à rapprocher le symbole de guidage d'arrondi de la ligne d'horizon, suivant une loi de commande représentative d'un profil d'augmentation de la vitesse verticale durant l'arrondi, la loi de commande tenant compte de la pente topographique de la piste d'atterrissage ;
- la loi de commande est propre à permettre l'atteinte d'une vitesse verticale cible de fin d'arrondi, calculée en fonction de la pente topographique de la piste d'atterrissage ;
- l'ensemble de génération d'affichage comprend un module de récupération des données d'un capteur de mesure d'une hauteur de l'aéronef par rapport à la piste d'atterrissage, l'ensemble de génération d'affichage étant propre à déterminer la pente topographique de la piste d'atterrissage à partir des données du capteur de mesure de la hauteur de l'aéronef ;
- la pente réelle de l'aéronef correspond à une pente cible de l'aéronef suivant la loi de commande lorsque le symbole de guidage d'arrondi coïncide avec le symbole de vecteur vitesse ;
- il comprend un module de pilotage automatique, propre à actionner les commandes de l'aéronef pour asservir la position du symbole de vecteur vitesse à la position du symbole de guidage d'arrondi pour faire suivre à l'aéronef un profil d'augmentation de la vitesse verticale suivant la loi de commande ;
- l'afficheur est un afficheur au moins partiellement transparent, tel qu'un écran semi-transparent placé devant un pare-brise du cockpit, un système de projection d'images sur le pare-brise du cockpit, un pare-soleil semi-transparent, un viseur de casque ou une lunette semi-transparente proche de l'oeil;
- l'ensemble de génération d'affichage sur l'afficheur est propre à afficher dynamiquement sur l'afficheur au moins une ligne d'horizon et une échelle de pente par rapport à la ligne d'horizon, et en ce qu'en approche d'une piste d'atterrissage, l'ensemble de génération d'affichage est propre à engendrer sur la ligne d'horizon une région déformée en fonction de la pente topographique de la piste d'atterrissage approchée par l'aéronef.
- l'ensemble de génération d'affichage comporte une application de calcul d'une déformation locale de la ligne d'horizon dans la région déformée, en fonction d'une pente topographique déterminée à partir d'au moins une information topographique caractéristique de la piste d'atterrissage, l'information topographique étant issue d'une base de données ou mesurée ;
- dans une première phase d'évolution de l'aéronef à distance de la piste d'atterrissage, l'ensemble de génération d'affichage est propre à calculer la déformation locale de la ligne d'horizon dans la région déformée en fonction d'une pente topographique déterminée à partir d'au moins une information topographique issue d'une base de données, et dans une deuxième phase d'évolution de l'aéronef au-dessus de la piste d'atterrissage, l'ensemble de génération d'affichage est propre à calculer la déformation locale de la ligne d'horizon dans la région déformée en fonction d'une pente topographique déterminée à partir d'une information topographique mesurée ;
- la base de données comporte un profil de pente topographique le long de la piste d'atterrissage, la pente topographique étant déterminée le long de la piste d'atterrissage à partir du profil de pente topographique ;
- l'application de calcul est propre à récupérer des données d'un capteur de mesure de la pente avion et d'un capteur de mesure d'une hauteur de l'aéronef par rapport au sol, et à calculer une pente topographique, sur la base des données reçues du capteur de mesure de la pente avion et du capteur de mesure de la hauteur de l'aéronef par rapport au sol ;
- l'ensemble de génération d'affichage est propre à afficher sur l'afficheur un symbole de vecteur vitesse, indicatif de la pente de l'aéronef sur l'échelle de pente, la largeur de la région déformée sur la ligne d'horizon propre à être affichée par l'ensemble de génération d'affichage étant supérieure à la largeur du symbole de vecteur vitesse ;
- la région déformée sur la ligne d'horizon, propre à être affichée par l'ensemble de génération d'affichage est centrée horizontalement sur le symbole de vecteur vitesse ;
- la région déformée sur la ligne d'horizon propre à être affichée par l'ensemble de génération d'affichage présente une forme de créneau, ayant une hauteur, prise par rapport à la ligne d'horizon, fonction de la pente topographique de la piste d'atterrissage ;
- la région déformée sur la ligne d'horizon propre à être affichée par l'ensemble de génération d'affichage présente une forme incurvée, notamment une forme de bosse, la forme incurvée présentant un sommet à une hauteur, prise par rapport à la ligne d'horizon, fonction de la pente topographique de la piste d'atterrissage ;
- l'ensemble de génération d'affichage est propre à afficher un symbole de guidage d'arrondi en regard horizontalement de la région déformée ;
- lorsque la pente topographique de la piste d'atterrissage est non nulle et positive, la région déformée de la ligne d'horizon engendrée par l'ensemble de génération d'affichage s'étend vers le haut, et dans lequel lorsque la pente topographique de la piste d'atterrissage est non nulle et négative, la région déformée de la ligne d'horizon engendrée par l'ensemble de génération d'affichage s'étend vers le bas ;

L'invention a également pour objet un procédé comprenant les étapes suivantes :

- fourniture d'un système tel que décrit plus haut;
- affichage dynamique sur l'afficheur, par l'ensemble de génération d'affichage, d'une ligne d'horizon et d'un symbole de vecteur vitesse ;
- en approche d'une piste d'atterrissage donnée, affichage dynamique sur l'afficheur, par l'ensemble de génération d'affichage d'un symbole de guidage d'arrondi, la position du symbole de guidage d'arrondi dépendant de la pente de la piste d'atterrissage approchée ;

Le procédé selon l'invention peut comprendre l'une ou plusieurs des caractéristiques suivantes :

- le symbole de guidage d'arrondi est propre à avertir l'équipage de l'atteinte d'une position de début de manoeuvre d'arrondi, de préférence d'une hauteur de début de manoeuvre d'arrondi,
  la position de début de manoeuvre d'arrondi étant déterminée par l'ensemble de génération d'affichage en tenant compte de la pente topographique de la piste d'atterrissage ;
- Il comprend les étapes suivantes :

  - en approche d'une piste d'atterrissage, génération et affichage sur l'afficheur par l'ensemble de génération d'affichage d'une région déformée de la ligne d'horizon en fonction de la pente topographique de la piste d'atterrissage approchée ;
  - l'étape de génération comprend le calcul d'une déformation locale de la ligne d'horizon dans la région déformée, en fonction d'au moins une information topographique caractéristique de la piste d'atterrissage issue d'une base de données ou mesurée.

L'invention sera mieux comprise à la lecture de la description qui va suivre, donnée uniquement à titre d'exemple, et faite en se référant aux dessins annexes, sur lesquels :

- la figure 1 est une vue schématique d'un premier système d'affichage d'un aéronef selon l'invention ;
- la figure 2 illustre schématiquement le cockpit d'un aéronef comprenant le premier système d'affichage ;
- les figures 3 à 7 illustrent l'affichage engendré par le système d'affichage lors de l'approche de l'aéronef vers une piste d'atterrissage ;
- la figure 8 est une vue schématique de côté, illustrant la pente apparente de l'aéronef par rapport à la piste, pour une piste ayant une pente positive ;
- la figure 9 est une vue analogue à la figure 8, pour une piste en pente négative ;
- la figure 10 est une vue schématique de côté, illustrant deux points successifs de la trajectoire de l'aéronef par rapport à une piste en pente positive ;
- la figure 11 est une vue analogue à la figure 4, lors d'une évolution en vent de travers ;
- la figure 12 est une vue analogue à la figure 4, illustrant l'affichage par une variante de système selon l'invention.

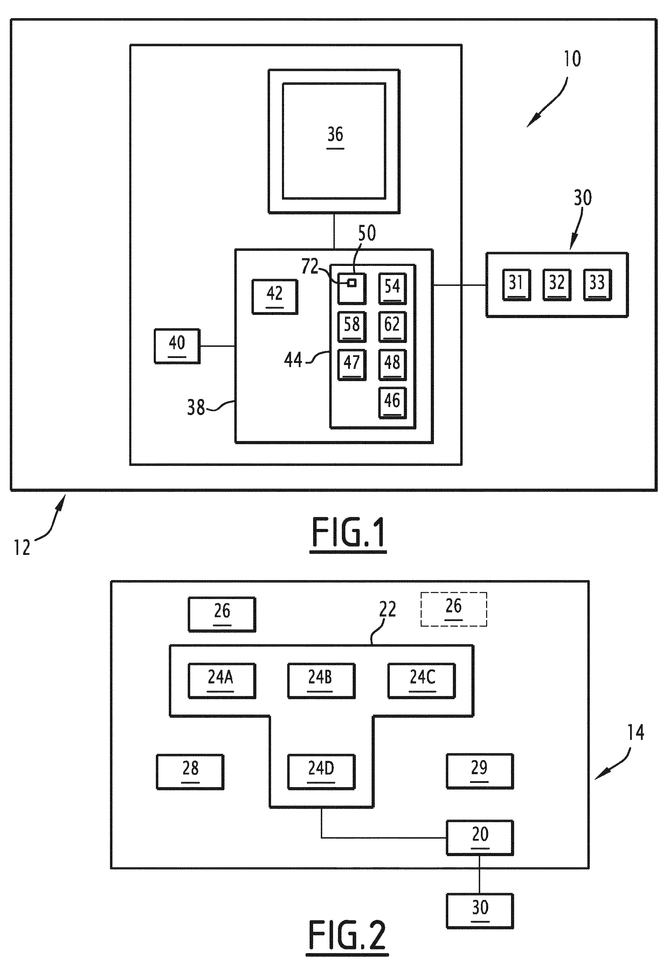

Un premier système 10 d'affichage d'un aéronef 12 selon l'invention est illustré schématiquement par les figures 1 et 2.

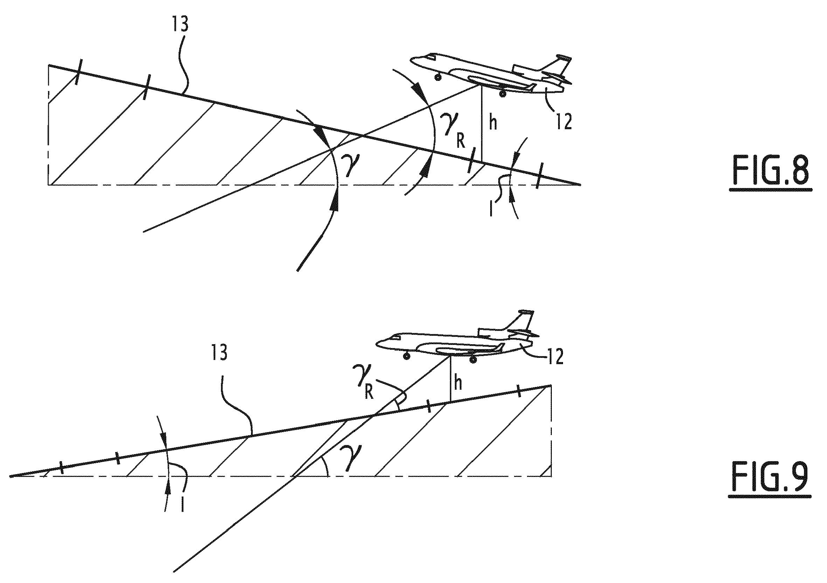

Ce système 10 est destiné à être installé dans un aéronef 12, visible schématiquement sur la figure 8, pour permettre l'affichage d'informations sur un afficheur présent dans le cockpit 14 de l'aéronef représenté schématiquement sur la figure 2.

Le système 10 est destiné à assister le pilote de l'aéronef lors d'une phase d'approche, au voisinage d'une piste 13, représentée schématiquement sur la figure 8.

En référence à la figure 2, le cockpit 14 est muni d'un système principal d'affichage 22 raccordé à une unité centrale d'avionique 20.

Le système principal 22 permet à l'équipage de piloter l'aéronef, de gérer sa navigation, de surveiller et commander les différents systèmes fonctionnels présents dans l'aéronef. Le système 22 comporte une planche de bord munie d'une pluralité d'écrans de base 24A à 24D formant des afficheurs tête basse.

Dans cet exemple le cockpit 14 est aussi avantageusement muni d'au moins un écran semi-transparent tête haute 26, placé en regard du pare-brise, voire de deux écrans semi-transparents tête haute 26.

Le cockpit 14 est par ailleurs muni d'un organe de commande 28 du pilotage de l'aéronef, tel qu'une manette ou un manche.

Il comporte avantageusement un système de pilotage automatique 29 propre à être activé par l'équipage.

De manière connue, les écrans de base 24A et 24C sont par exemple des écrans primaires d'affichage destinés à l'affichage de paramètres de vol de l'aéronef. Les écrans de base 24B et 24D sont par exemple des écrans multifonctionnels de navigation et/ou de suivi et de commande des systèmes d'avionique.

Le système d'affichage principal 22 est muni d'un ensemble de gestion d'affichage (non représenté) propre à afficher les différentes fenêtres présentes sur ces écrans 24A à 24D.

L'unité centrale d'avionique 20 est raccordée à un système 30 de capteurs de mesure de paramètres avions de l'aéronef 12.

Le système 30 de capteurs de mesure comporte par exemple des capteurs de mesure de paramètres extérieurs à l'aéronef tel que la température, la pression ou la vitesse, des capteurs de mesure de paramètres internes à l'aéronef et à ses différents systèmes fonctionnels, et des capteurs de positionnement, tel que des capteurs 31 de position géographique, notamment un capteur GPS, des capteurs 32 de détermination de la pente de l'aéronef, notamment au moins une centrale inertielle, et un capteur 33 de détermination d'une hauteur par rapport au sol, notamment un radio-altimètre.

Les capteurs du système 30 sont propres à fournir une information sur la position géographique de l'aéronef 12, sur sa vitesse, son cap et son attitude (assiette longitudinale, angle de roulis).

En référence à la figure 1, le système d'affichage 10 selon l'invention est raccordé au système de capteurs de mesure 30.

Le système d'affichage 10 comporte au moins un afficheur 36, et un ensemble 38 de génération d'affichage sur l'afficheur 36, raccordé à l'afficheur 36 et au système de capteurs de mesure 30. Le système 10 comporte en outre une interface homme/machine 40.

L'afficheur 36 est par exemple un des écrans 24A à 24B ou/et est l'écran semi-transparent tête haute 26 du cockpit 14. Dans d'autres variantes, l'afficheur 36 est par exemple un système de projection d'images sur le pare-brise du cockpit, un pare-soleil semi-transparent, un viseur de casque ou une lunette semi-transparente proche de l'oeil.

Dans un premier mode de réalisation, qui sera décrit par la suite, l'afficheur 36 du système d'affichage 10 selon l'invention est l'écran semi-transparent tête haute 26 du cockpit 14.

L'ensemble de génération d'affichage 38 comporte au moins un processeur 42 et au moins une mémoire 44 contenant une pluralité de modules logiciels propres à être exécutés par le processeur 42. Il comporte une base de données 46 de caractéristiques de pistes d'atterrissage, par exemple stockée dans la mémoire 44.

L'ensemble de génération d'affichage 38 comporte un module 48 de récupération des données des capteurs de mesure du système 30, en particulier du capteur 32 de mesure de la pente de l'aéronef 12, et du capteur 33 de mesure de hauteur de l'aéronef 12 par rapport au sol.

L'ensemble de génération d'affichage 38 comporte en outre un module 47 de génération d'un symbole 49 de maquette de l'aéronef, un module 50 de génération d'une ligne 52 d'horizon artificiel, et un module 54 associé de génération d'une échelle de pente 56.

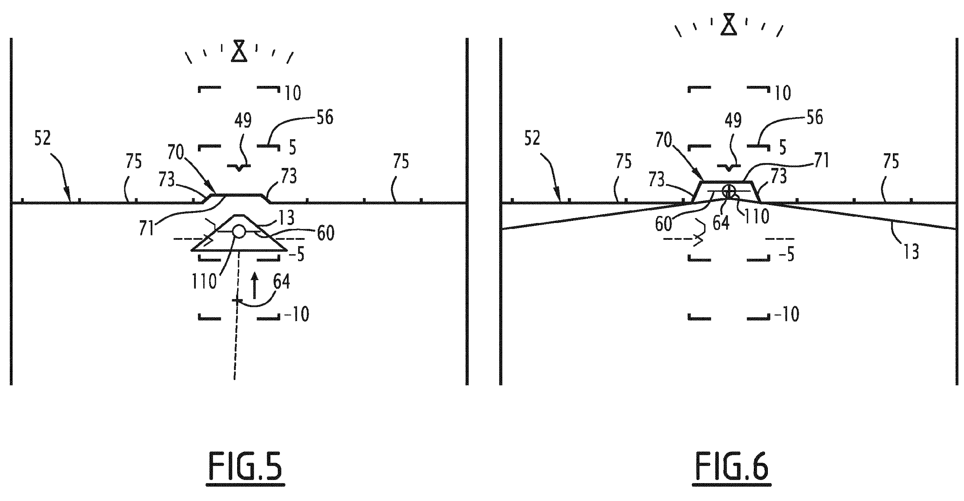

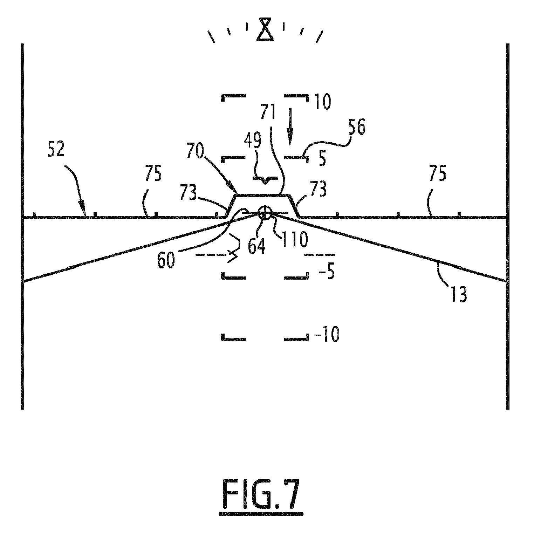

L'ensemble de génération d'affichage 38 comprend également un module 58 de génération d'un symbole 60 de vecteur vitesse, et un module 62 de génération d'un symbole 64 de guidage d'arrondi, visible sur les figures 5 à 7.

L'ensemble de génération d'affichage 38 comporte en outre des modules (non représentés) de génération d'autres symboles représentatifs de paramètres de vol, par exemple un indicateur d'altitude, un indicateur de badin, de vitesse verticale, de vitesse sol, d'information moteur, et de conformation de sustentation de l'aéronef.

Le module de génération 47 est propre à engendrer l'affichage d'un symbole 49 de maquette avion qui matérialise une projection à l'infini de l'axe longitudinal de l'aéronef 12, à partir des données reçues des capteurs du système de capteurs de mesure 30.

Le module de génération 50 est propre à déterminer, à partir des données reçues des capteurs du système de capteurs de mesure 30, la position d'une ligne d'horizon artificiel 52 par rapport à l'attitude courante de l'aéronef. Cette ligne d'horizon 52 est droite lorsque l'aéronef 12 évolue ailes à plat, et s'incline en fonction de l'angle de gîte de l'aéronef 12.

Dans au moins une phase d'approche de l'aéronef 12 vers la piste d'atterrissage 13, le module 50 est propre à engendrer, sur la ligne d'horizon 52, une région déformée 70 en fonction de la pente topographique de la piste d'atterrissage 13.

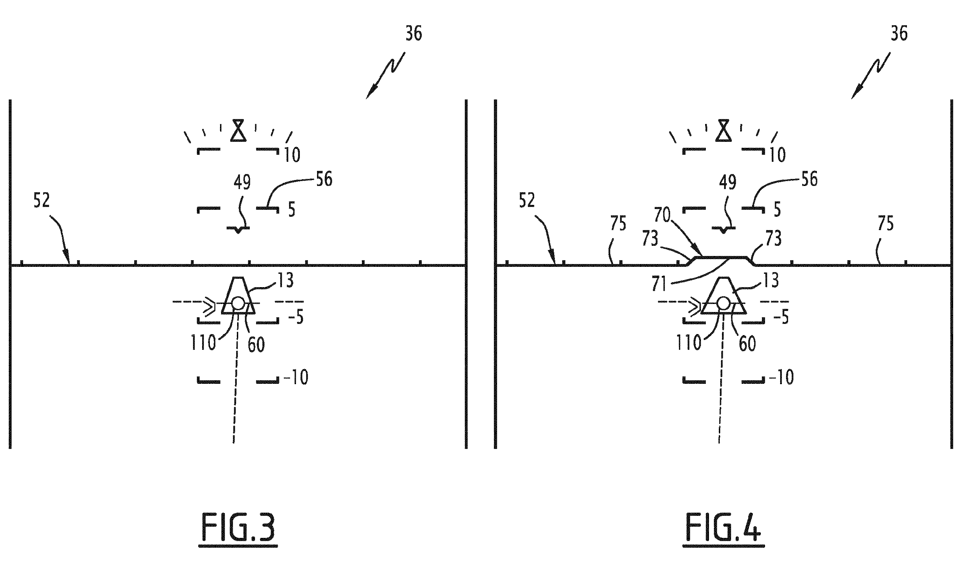

Dans l'exemple représenté sur la figure 4, la région déformée 70 est une région de la ligne d'horizon 52 centrée sur le symbole de vecteur de vitesse 60. Elle présente une forme de créneau avec un segment 71 parallèle au reste 75 de la ligne d'horizon 52, et deux segments de liaison 73 inclinés ou perpendiculaires par rapport au reste 75 de la ligne d'horizon 52.

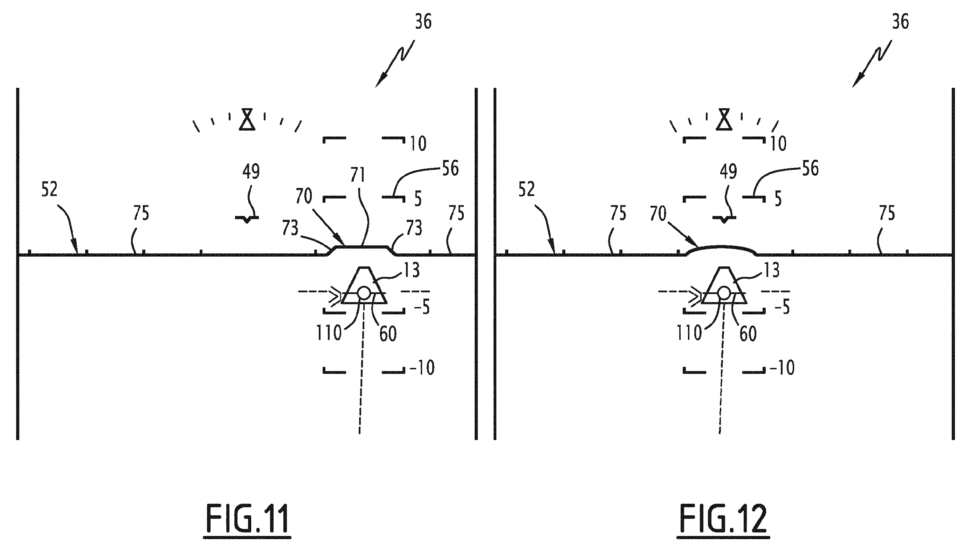

En variante illustrée par la figure 11, la région déformée 70 présente une forme incurvée, par exemple une forme de bosse. La forme incurvée présente un sommet à une hauteur, prise par rapport au reste 75 de la ligne d'horizon 52, fonction de la pente topographique de la piste d'atterrissage 13.

La région déformée 70 s'étend vers le haut lorsque la pente topographique de la piste d'atterrissage 13 est positive. Elle s'étend vers le bas lorsque la pente topographique de la piste d'atterrissage 13 est négative.

En référence à la figure 1, le module de génération 50 comporte une application logicielle de calcul 72 propre à calculer une déformation locale de la ligne d'horizon 52 dans la région déformée 70, en fonction de la pente topographique de la piste d'atterrissage 13.

Par « pente topographique », on entend la pente réelle de la piste d'atterrissage 13 sur le terrain.

La déformation de la région déformée 70 est ici caractérisée par sa hauteur maximale, prise verticalement par rapport au reste de la ligne d'horizon 52.

L'application de calcul 72 est propre à récupérer au moins une information topographique caractéristique de la piste 13, issue d'une base de données ou mesurée, et à calculer la déformation de la région déformée 70 en fonction de la ou des informations topographiques caractéristiques.

Avantageusement, dans une première phase d'évolution de l'aéronef 12 à distance axialement de la piste d'atterrissage 13, l'application logicielle de calcul 72 est propre à récupérer au moins une information topographique dans la base de données de pistes d'atterrissage 46, puis à calculer la déformation locale de la ligne d'horizon 52 dans la région déformée 70 en fonction de la ou de chaque information topographique issue d'une base de données.

L'information topographique issue d'une base de données est par exemple l'altitude à un point donné de la piste et/ou la longueur de la piste. La base de données 46 comporte par exemple pour chaque piste d'atterrissage 13, l'altitude du seuil de piste, l'altitude de la fin de piste et la longueur de la piste.

L'application logicielle de calcul 72 est alors propre à calculer une pente estimée de la piste 13 sur la base de l'altitude du seuil de piste, de l'altitude de la fin de piste et de la longueur de la piste.

Dans une variante, l'information topographique issue d'une base de données contenue dans la base de données 46 est directement la pente topographique dans la zone de toucher autour du point cible de toucher.

Dans une deuxième phase d'évolution de l'aéronef 12 au-dessus de la piste d'atterrissage 13, l'application logicielle de calcul 72 est propre à calculer en continu une information topographique caractéristique mesurée de la piste 13, en fonction des données des capteurs 31, 33 de mesure de la pente avion et de la hauteur de l'aéronef par rapport au sol récupérées par le module de récupération de données 48.

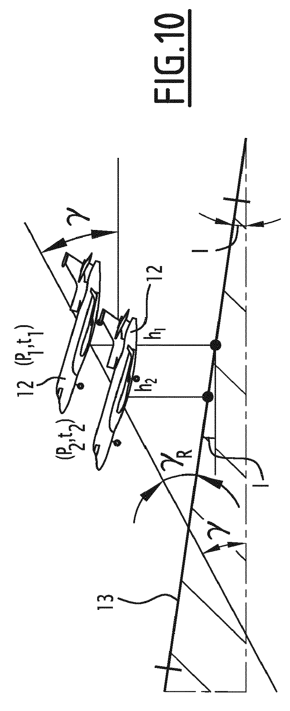

En référence à la figure 10, cette information topographique est une pente calculée I et est déterminée notamment à partir des mesures collectées en deux points successifs P1, P2 de la trajectoire de l'aéronef 12 au temps de passage successifs t1, t2, et notamment des hauteurs h1, h2 mesurées aux points P1, P2, de la pente avion mesurée entre les points P1 et P2, et de la vitesse horizontale VH de l'aéronef 12.

La pente topographique locale I de la piste est par exemple estimée par les équations suivantes :

$$\Delta = \arctan \left[ (h2 - h1) / (VH \times (t2\text{-}t1)] \right] \qquad (1)$$

$$I = \gamma - \Delta \qquad\qquad (2)$$

La hauteur maximale de la région déformée 70 est alors calculée par l'application de calcul 72 pour correspondre à la valeur de la pente topographique issue d'une base de données ou mesurée de la piste d'atterrissage 13, prise sur l'échelle de pente 56 engendrée par le module 54.

Par exemple, si la pente topographique issue d'une base de données ou mesurée est de N degrés, la hauteur maximale de la région déformée 70 par rapport au reste 75 de la ligne d'horizon 52 est de N degrés sur l'échelle de pente 56 engendrée par le module 54.

Dans la première phase d'évolution de l'aéronef 12 à l'écart de la piste d'atterrissage 13, la hauteur de la région déformée 70 reste constante. Dans une deuxième phase d'évolution de l'aéronef 12, au-dessus de la piste d'atterrissage 13, la hauteur de la région déformée 70 évolue en continu en fonction de la pente topographique locale de la piste 13 au-dessous de l'aéronef 12 mesurée à l'aide des capteurs du système 30.

Dans cet exemple, la région déformée 70 engendrée par le module 50 est centrée par rapport à l'échelle de pente 56, et par rapport au symbole de vecteur vitesse 60.

La région déformée 70 présente ici une largeur supérieure à celle du symbole de vecteur vitesse 60, et de préférence, à celle de l'extrémité de la piste d'atterrissage 13.

La largeur de la région déformée 70 reste cependant de préférence inférieure à 80 %, avantageusement inférieure à 50% de la largeur totale de la ligne d'horizon 52.

La largeur de la région déformée 70 est par exemple supérieure à celle du symbole de vecteur vitesse 60, et inférieure à deux fois la largeur du symbole de vecteur vitesse 60.

La largeur de la piste d'atterrissage 13 est obtenue à partir de la base de données 46.

La région déformée 70 est donc localisée. Elle suit l'évolution latérale du symbole de vecteur vitesse 60 comme illustré par la figure 11, lors d'une évolution vent de travers.

Le module de génération 54 est propre à engendrer une échelle de pente 56 centrée horizontalement sur le reste 75 de la ligne d'horizon 52, à l'écart de la région déformée 70. L'échelle de pente 56 est par exemple graduée en degrés de pente par rapport à la ligne d'horizon artificiel 52, prise à l'écart de la région déformée 70.

Le module de génération 58 est propre à engendrer l'affichage d'un symbole de vecteur vitesse 60 indiquant la direction du vecteur vitesse de l'aéronef 12, sur la base des données reçues des capteurs du système 30. L'écart vertical entre la ligne d'horizon artificiel 52, à l'écart de la région déformée 70, représente la pente sol $\gamma$ de l'aéronef, telle qu'illustrée sur la figure 8, prise par rapport à un sol non incliné.

L'écart vertical entre la région déformée 70 et le symbole de vecteur vitesse 60 représente alors la pente sol $\gamma_R$ apparente de l'aéronef 12 par rapport à la piste d'atterrissage 13, tenant compte de la pente topographique I de la piste d'atterrissage 13 (voir figure 8 ou 9).

Le module de génération 62 est propre à engendrer l'affichage du symbole de guidage d'arrondi 64, en fin d'approche vers la piste d'atterrissage 13.

Il est propre à afficher le symbole de guidage d'arrondi 64 pour avertir l'équipage de l'atteinte d'une position de début de manoeuvre d'arrondi, de préférence d'une hauteur de début de manoeuvre d'arrondi. La position de début de manoeuvre d'arrondi est déterminée en tenant compte de la pente topographique I de la piste d'atterrissage 13.

La position de début de manoeuvre d'arrondi est déterminée par le module de génération 62 en fonction d'une information de pente topographique issue d'une base de données de la piste d'atterrissage 13, déterminée à l'aide de la base de données de pistes d'atterrissage 46, à l'aide d'une application de calcul 72 comme décrit plus haut, soit en utilisant les altitudes de seuil et de fin de piste et la longueur de piste contenues dans la base de données 46, soit en utilisant directement une pente contenue dans la base de données 46.

La position de début de manoeuvre d'arrondi est déterminée en tenant également compte de la pente avion mesurée $\gamma$.

Avantageusement, le module de génération 62 comporte une base de données de hauteurs de début de manoeuvre d'arrondi, en fonction de la pente avion $\gamma$ mesurée par le capteur 32 et de la pente topographique I de la piste d'atterrissage 13, telle que déterminée par l'application de calcul 72, notamment en fonction de la pente apparente $\gamma_R$ calculée à partir de la pente avion $\gamma$ et de la pente topographique I.

Le module de génération 62 est propre à signaler l'atteinte de la hauteur de début de manoeuvre d'arrondi en plaçant le symbole de guidage d'arrondi 64 en regard du symbole de vecteur vitesse 60. De préférence, pour signaler que l'aéronef 12 a atteint la hauteur de début d'arrondi, le symbole de guidage d'arrondi 64 est disposé au même niveau horizontal que le symbole de vecteur vitesse 60, en coïncidence horizontale avec celui-ci, de préférence dans une zone de réception 110 du symbole de vecteur vitesse 60 matérialisée ici par un cercle définissant la pente souhaitée de l'aéronef.

Pour permettre au pilote d'anticiper l'atteinte de la position de début de manoeuvre d'arrondi, le module de génération 62 est avantageusement propre à afficher le symbole de guidage d'arrondi 64 sous le symbole de vecteur vitesse 60 avant l'atteinte de la position de début de manoeuvre d'arrondi et à le rapprocher verticalement du symbole de vecteur vitesse 60 pour atteindre le symbole de vecteur vitesse 60 à la position de début de manoeuvre d'arrondi.

Une fois la position de début de manoeuvre d'arrondi atteinte, le module de génération 62 est propre à rapprocher le symbole de guidage d'arrondi 64 de la ligne d'horizon 52 suivant une loi de commande représentative d'un profil d'augmentation de la vitesse verticale durant l'arrondi.

La loi de commande relie par exemple, pour chaque pente apparente $\gamma_R$ de l'aéronef 12 par rapport à la piste d'atterrissage 13, une hauteur par rapport à la piste d'atterrissage 13 à une vitesse verticale cible. La loi de commande permet de passer d'une première vitesse verticale de début d'arrondi, lorsque l'aéronef 12 atteint la hauteur de début de manoeuvre d'arrondi, à une deuxième vitesse verticale cible de fin d'arrondi supérieure à la première vitesse verticale lorsque l'aéronef atteint la fin d'arrondi avant le toucher des roues. Elle tient compte de la pente topographique de la piste d'atterrissage 13.

De préférence, la deuxième vitesse verticale cible de fin d'arrondi, qui s'applique à la fin d'arrondi est calculée en fonction de la pente topographique de la piste d'atterrissage 13.

Le module de génération 62 est propre à déterminer à chaque instant la deuxième vitesse verticale cible en fonction de la pente topographique de la piste d'atterrissage 13. La pente topographique, est initialement estimée à l'aide des informations topographiques issue d'une base de données tel que décrit plus haut, puis est obtenue par calcul à l'aide des données de hauteur et des données de pente mesurées respectivement à l'aide des capteurs 33 et 32, comme indiqué plus haut.

Suivant la loi de commande, le symbole de guidage d'arrondi 64 est déplacé par rapport à la ligne d'horizon 52, en traduisant sous forme d'une pente sur l'échelle de pente avion 56 la vitesse verticale cible, obtenue à la hauteur mesurée à chaque instant, par le capteur 33.

Puis, une fois la fin d'arrondi atteinte, le module de génération 62 est propre à maintenir le symbole de guidage d'arrondi 64 à une distance constante de la ligne d'horizon 52, correspondant à la valeur de vitesse verticale cible souhaitée en fin d'arrondi, permettant un toucher adéquat de l'aéronef 12 sur la piste d'atterrissage 13.

Le fonctionnement du système d'affichage 10 selon l'invention, lors de l'approche vers une piste d'atterrissage 13 va maintenant être décrit, en référence aux figures 3 à 7.

Initialement, l'aéronef 12 descend vers la piste d'atterrissage 13. Comme illustré par la figure 3, le module de génération 50 maintient la ligne d'horizon 52 dans une configuration non déformée, dépourvue de région déformée 70.

Le module de génération 54 engendre l'affichage d'une échelle de pente 56 et le module de génération 58 engendre l'affichage d'un symbole de vecteur vitesse 60 dont la distance verticale à la ligne d'horizon 52 traduit la pente avion, sur l'échelle de pente 56.

Puis, à une distance donnée de la piste d'atterrissage 13, l'équipage sélectionne la piste d'atterrissage 13 visée. L'application de calcul 72 récupère des informations topographiques dans la base de données de piste 46.

Les informations topographiques issues d'une base de données récupérées sont par exemple l'altitude au seuil de piste, l'altitude en fin de piste et la longueur de la piste.

Sur la base des informations topographiques récupérées dans la base de données 46, l'application logicielle de calcul 72 calcule une pente topographique issue d'une base de données de la piste d'atterrissage 13.

En fonction de la pente topographique issue d'une base de données, l'application de calcul 72 détermine une hauteur maximale de la région déformée 70 par rapport au reste 75 de la ligne d'horizon 52 et affiche la région déformée 70 comme illustré sur la figure 4.

Dans cette première phase d'évolution, la hauteur de la région déformée 70 par rapport au reste de la ligne d'horizon 52 est constante.

La hauteur de la région déformée 70 est représentative de la pente topographique issue d'une base de données de la piste d'atterrissage 13. La région déformée 70 s'étend vers le haut dans le cas où la pente topographique est positive et vers le bas, dans le cas où la pente topographique est négative.

La largeur de la région déformée 70 est légèrement supérieure à celle du symbole de vecteur vitesse 60 comme indiqué plus haut. La région déformée 70 reste centrée sur le symbole de vecteur vitesse 60.

Lorsque l'aéronef 12 atteint la piste d'atterrissage 13, ou à partir d'une altitude donnée au-dessus de la piste d'atterrissage 13, le capteur 33 mesure à chaque instant la hauteur de l'aéronef 12 par rapport à la piste d'atterrissage 13. La pente avion est par ailleurs mesurée en continu par le capteur 32.

Sur la base de cette hauteur mesurée et de la pente avion, la pente topographique locale I de la piste visible sur la figure 8 est alors estimée par l'application logicielle de calcul 72 en utilisant les équations (1) et (2) ci-dessus.

La hauteur maximale de la région déformée 70 est alors calculée à chaque instant par le module de calcul 72 pour correspondre à la valeur de la pente topographique mesurée de la piste d'atterrissage sur l'échelle de pente 56 engendrée par le module de génération 54.

Ainsi, en visualisant la région déformée, le pilote anticipe simplement que la piste d'atterrissage 13 n'est pas horizontale et adapte son arrondi en fonction de la pente topographique réelle de la piste d'atterrissage 13, dont la valeur est issue de tables dans la première phase d'évolution, et dont la valeur est mesurée dans la deuxième phase d'évolution.

Dans le cas d'une pente topographique positive de la piste d'atterrissage 13, ceci évite au pilote de ne pas suffisamment augmenter la vitesse verticale, ce qui serait susceptible de conduire à un atterrissage dur.

Au contraire, le pilote peut se caler à une distance donnée de la région déformée 70 de la ligne d'horizon 52 qui correspond à la pente apparente $\gamma_R$ de l'aéronef 12 par rapport à la piste d'atterrissage 13.

Dans le cas d'une pente topographique négative de la piste d'atterrissage 13, ceci évite au pilote de trop augmenter la vitesse verticale, ce qui engendrerait un atterrissage long et un risque de sortie de piste. La sécurité de l'atterrissage est donc augmentée.

L'affichage d'une région déformée 70 sur la ligne d'horizon artificiel 52 ne modifie pas les repères visuels du pilote, à l'opposé d'un décalage de toute la ligne d'horizon artificiel 52 en fonction de la pente de la piste.

Le pilote, pour réaliser l'arrondi, guide son vecteur vitesse relativement à la région déformée 70 comme il le fait pour une ligne d'horizon non déformée sur une piste plate. En particulier, le pilote place avantageusement le symbole de vecteur vitesse 60 sous la région déformée 70 et remonte progressivement le symbole de vecteur vitesse 60 par rapport à la région déformée 70 afin de placer le symbole 60 à une distance déterminée de la région déformée correspondant à une pente cible en fin d'arrondi (par exemple de l'ordre de 1° sous la région déformée 70 de la ligne d'horion).

Le pilote peut donc anticiper la manoeuvre comme sur une piste plate, sans perte de repères, qu'il pilote directement ou qu'il surveille les actions d'un système de pilotage automatique

Par ailleurs, comme illustré par la figure 5, pour permettre au pilote d'anticiper l'atteinte de la position de début de manoeuvre d'arrondi, le module de génération 62 est avantageusement propre à afficher le symbole de guidage d'arrondi 64, ici en forme de croix, sous le symbole de vecteur vitesse 60 avant la position de début de manoeuvre d'arrondi et à le rapprocher verticalement du symbole de vecteur vitesse 60 jusqu'à la position de début de manoeuvre d'arrondi.

La position de début d'arrondi est alors déterminée par le module de génération 62 en fonction d'une information de pente topographique issue d'une base de données de la piste d'atterrissage 13, déterminée à l'aide de la base de données de pistes d'atterrissage 46, par l'application de calcul 72 comme décrit plus haut.

La position de début de manoeuvre d'arrondi est en outre déterminée en tenant compte de la pente avion γ mesurée par le capteur 32.

En référence à la figure 6, le module de génération 62 signale ensuite l'atteinte de la position de début de manoeuvre d'arrondi en plaçant le symbole de guidage d'arrondi 64 en regard horizontalement du symbole de vecteur vitesse 60.

A la hauteur de début de manoeuvre d'arrondi, le symbole de guidage d'arrondi 64 est disposé au même niveau horizontal que le symbole de vecteur vitesse 60, en coïncidence horizontale avec le symbole de vecteur vitesse 64, de préférence dans la zone de réception 110 du symbole de vecteur vitesse matérialisée ici par un cercle définissant la pente souhaitée de l'aéronef.

Ensuite, le module de génération 62 commande le rapprochement du symbole de guidage d'arrondi 64 vers la ligne d'horizon 52.

Le rapprochement suit la loi de commande prédéterminée, correspondant à une variation de vitesse verticale en fonction de la hauteur mesurée par rapport à la piste d'atterrissage 13, pour passer d'une première vitesse verticale cible à la position de début de manoeuvre d'arrondi à une deuxième vitesse verticale cible supérieure à la première vitesse verticale cible en fin d'arrondi.

Le module de génération 62 détermine à chaque instant la deuxième vitesse verticale cible en fonction de la pente topographique de la piste d'atterrissage 13. La pente topographique est initialement estimée à l'aide des informations topographiques issues d'une base de données, puis est mesurée à partir des données reçues des capteurs 32 et 33, comme indiqué plus haut.

À chaque instant, le module de génération 64 reçoit une donnée de hauteur mesurée à l'aide du capteur 33, et détermine la distance verticale séparant le symbole de guidage d'arrondi 64 de la ligne d'horizon 52 sur la base de la loi de commande.

Le symbole de guidage d'arrondi 64 se rapproche donc progressivement de la ligne d'horizon 52, indiquant clairement au pilote que l'arrondi doit être mis en oeuvre, et proposant au pilote une stratégie d'arrondi sur laquelle il doit caler le symbole de vecteur vitesse 60.

Le pilote ou le système de pilotage automatique 29 peut alors suivre la stratégie d'arrondi proposée en alignant horizontalement le symbole de vecteur vitesse 60 avec le symbole de guidage d'arrondi 64.

Une fois la fin d'arrondi atteinte, le module de génération 62 maintient le symbole de guidage d'arrondi 64 à une deuxième distance constante de la ligne d'horizon 52.

La présence du symbole de guidage d'arrondi 64 aide le pilote à déterminer le moment approprié pour initier l'arrondi, ce qui simplifie sa tâche en fin d'atterrissage.

Ce moment est non seulement déterminé en fonction de la pente avion mesurée, mais également en fonction d'une pente topographique de la piste d'atterrissage 13, pour tenir compte de la pente apparente entre l'aéronef 12 et la piste d'atterrissage 13.

Le déplacement vertical de ce symbole 64 est par ailleurs utile pour déterminer un profil souhaité de vitesse verticale durant l'arrondi.

Dans une variante, le symbole de guidage d'arrondi 64 est affiché uniquement lorsque les données provenant des capteurs du système 30 sont utilisées pour déterminer la pente mesurée de la piste 13.

Le symbole de guidage d'arrondi 64 est alors déplacé à chaque instant en fonction de la loi de commande, comme décrit plus haut.

Dans l'invention qui vient d'être décrite, la pente topographique de la piste d'atterrissage étant prise en compte dès le début de l'arrondi, ceci permet de mettre en oeuvre une manoeuvre d'arrondi avec une continuité dynamique et évite une augmentation brutale de la commande à cabrer dans le cas d'une pente positive.

Dans une variante, la base de données 46 contient un profil de pente topographique le long de la piste d'atterrissage 13, définissant pour chaque point de la piste, une information topographique de pente issue d'une base de données.

Le module de génération 50 est propre à calculer la hauteur de la région déformée en fonction de l'information topographique de pente issue d'une base de données correspondant à chaque point de la piste d'atterrissage 13, lorsque l'aéronef 12 se déplace au-dessus de la piste d'atterrissage 13. Dans une variante, le module de génération 50 est propre à maintenir la ligne d'horizon 52 sans région déformée 70 tant que des informations mesurées de pente topographique ne sont pas obtenues de manière fiable à partir du système de capteurs de mesure 30.

Dans une variante, le module de génération 50 est propre à afficher une ligne d'horizon 52 artificiel sans déformation. L'affichage du symbole de guidage d'arrondi 64 reste identique.

**Revendications**

**1.** Système (10) d'affichage d'un aéronef (12), comprenant :

- un afficheur (36) ;
- un ensemble de génération d'affichage (38) sur l'afficheur (36), propre à afficher dynamiquement sur l'afficheur (36) au moins une ligne d'horizon (52), une échelle de pente (56) de l'aéronef (12) par rapport à la ligne d'horizon (52) et un symbole de vecteur vitesse (60), représentatif de la pente de l'aéronef (12) par rapport à la ligne d'horizon (52);

**caractérisé en ce que** l'ensemble de génération d'affichage (38) est propre à afficher, en approche d'une piste d'atterrissage (13), un symbole de guidage d'arrondi (64), la position du symbole de guidage d'arrondi (64) sur l'afficheur (36) dépendant de la pente topographique de la piste d'atterrissage (13) approchée.

2. Système (10) selon la revendication 1, dans lequel le symbole de guidage d'arrondi (64) est propre à avertir l'équipage de l'atteinte d'une position de début de manoeuvre d'arrondi, de préférence d'une hauteur de début de manoeuvre d'arrondi,
la position de début de manoeuvre d'arrondi étant déterminée en tenant compte de la pente topographique de la piste d'atterrissage (13).

3. Système (10) selon la revendication 2, dans lequel l'ensemble de génération d'affichage (38) comporte une application de calcul de la position de début de manoeuvre d'arrondi, en fonction d'une pente topographique déterminée à partir d'au moins une information topographique issue d'une base de données caractéristique de la piste d'atterrissage (13).

4. Système selon la revendication 2 ou 3, dans lequel l'application de calcul est propre à interroger une base de données (46) de pistes d'atterrissage (13), la base de données (46) comprenant au moins une information topographique correspondant à chaque piste d'atterrissage (13).

5. Système (10) selon la revendication 3, dans lequel la base de données (46) comporte une première information topographique d'altitude de seuil de piste, et une deuxième information topographique d'altitude de fin de piste, et une troisième information topographique de longueur de piste, la pente topographique étant déterminée en fonction de la première information topographique, de la deuxième information topographique et de la troisième information topographique.

6. Système selon l'une quelconque des revendications 2 à 5, dans lequel l'ensemble de génération d'affichage (38) est propre à signaler l'atteinte de la position de début de manoeuvre d'arrondi en plaçant le symbole de guidage d'arrondi (64) en coïncidence avec le symbole de vecteur vitesse (60).

7. Système (10) selon l'une quelconque des revendications 2 à 6, dans lequel, avant la position de début de manoeuvre d'arrondi, l'ensemble de génération d'affichage (38) est propre à afficher le symbole de guidage d'arrondi (64) sous le symbole de vecteur vitesse (60) et à le rapprocher verticalement du symbole de vecteur vitesse (60) jusqu'à la position de début d'arrondi.

8. Système (10) selon l'une quelconque des revendications précédentes, dans lequel l'ensemble de génération d'affichage (38) est propre à rapprocher le symbole de guidage d'arrondi (64) de la ligne d'horizon (52), suivant une loi de commande représentative d'un profil d'augmentation de la vitesse verticale durant l'arrondi, la loi de commande tenant compte de la pente topographique de la piste d'atterrissage (13).

9. Système (10) selon la revendication 8, dans lequel la loi de commande est propre à permettre l'atteinte d'une vitesse verticale cible de fin d'arrondi, calculée en fonction de la pente topographique de la piste d'atterrissage (13).

10. Système (10) selon la revendication 8 ou 9, dans lequel l'ensemble de génération d'affichage (38) comprend un module (48) de récupération des données d'un capteur de mesure d'une hauteur de l'aéronef (12) par rapport à la piste d'atterrissage (13), l'ensemble de génération d'affichage (38) étant propre à déterminer la pente topographique de la piste d'atterrissage (13) à partir des données du capteur de mesure de la hauteur de l'aéronef (12).

11. Système (10) selon l'une quelconque des revendications 8 à 10, dans lequel la pente réelle de l'aéronef (12) correspond à une pente cible de l'aéronef (12) suivant la loi de commande lorsque le symbole de guidage d'arrondi (64) coïncide avec le symbole de vecteur vitesse (60).

12. Système (10) selon l'une quelconque des revendications 8 à 11, comprenant un module de pilotage automatique, propre à actionner les commandes de l'aéronef (12) pour asservir la position du symbole de vecteur vitesse (60) à la position du symbole de guidage d'arrondi (64) pour faire suivre à l'aéronef (12) un profil d'augmentation de la vitesse verticale suivant la loi de commande.

**13.** Système (10) selon l'une quelconque des revendications précédentes, dans lequel l'afficheur (36) est un afficheur au moins partiellement transparent (26), tel qu'un écran semi-transparent placé devant un pare-brise du cockpit, un système (10) de projection d'images sur le pare-brise du cockpit, un pare-soleil semi-transparent, un viseur de casque ou une lunette semi-transparente proche de l'oeil.

**14.** Procédé d'affichage dans un aéronef (12), comprenant les étapes suivantes :

- fourniture d'un système (10) selon l'une quelconque des revendications précédentes ;
- affichage dynamique sur l'afficheur (36), par l'ensemble de génération d'affichage (38), d'une ligne d'horizon (52) et d'un symbole de vecteur vitesse (60) ;
- en approche d'une piste d'atterrissage (13) donnée, affichage dynamique sur l'afficheur (36), par l'ensemble de génération d'affichage (38) d'un symbole de guidage d'arrondi (64), la position du symbole de guidage d'arrondi (64) dépendant de la pente de la piste d'atterrissage (13) approchée.

**15.** Procédé selon la revendication 14, dans lequel le symbole de guidage d'arrondi (64) est propre à avertir l'équipage de l'atteinte d'une position de début de manoeuvre d'arrondi, de préférence d'une hauteur de début de manoeuvre d'arrondi,

la position de début de manoeuvre d'arrondi étant déterminée par l'ensemble de génération d'affichage (38) en tenant compte de la pente topographique de la piste d'atterrissage (13).

FIG.1

FIG.2

FIG.3

FIG.4

**FIG.5**

**FIG.6**

EP 3 109 596 A1

FIG.7

**FIG.8**

**FIG.9**

FIG.10

EP 3 109 596 A1

FIG.11

FIG.12

Europäisches
Patentamt

European
Patent Office

Office européen
des brevets

**RAPPORT DE RECHERCHE EUROPEENNE**

Numéro de la demande

EP 16 17 6183

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 787 408 A2 (BOEING CO [US]) 8 octobre 2014 (2014-10-08) | 1,2,14, 15 | INV. G01C23/00 B64D45/04 G05D1/06 |
| Y | * le document en entier * ----- | 3-13 | |
| Y | US 2013/103233 A1 (BOURRET THIERRY [FR] ET AL) 25 avril 2013 (2013-04-25) * abrégé * * alinéas [0036] - [0041], [0111] * ----- | 3-5,8-12 | |
| Y | James Albright: "Heads Up Display - Symbology", , 1 décembre 2013 (2013-12-01), XP055251328, Extrait de l'Internet: URL:http://code7700.com/g450_hud_symbology .html [extrait le 2016-02-18] * Paragraphe intitulé "Flare Cue", y compris la vidéo intégrée. * ----- | 6-11,13 | |
| A | US 8 374 736 B1 (RUPNIK BRIAN K [US]) 12 février 2013 (2013-02-12) * abrégé * * alinéas [0036] - [0041], [0111] * ----- | 1-15 | DOMAINES TECHNIQUES RECHERCHES (IPC) B64D G01C G05D |
| X,P | FR 3 023 368 A1 (AIRBUS OPERATIONS SAS [FR]) 8 janvier 2016 (2016-01-08) * abrégé * ----- | 1-15 | |

Le présent rapport a été établi pour toutes les revendications

| Lieu de la recherche | Date d'achèvement de la recherche | Examinateur |
|---|---|---|
| La Haye | 18 juillet 2016 | van Doornum, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 17 6183

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-07-2016

| Document brevet cité au rapport de recherche | | Date de publication | Membre(s) de la famille de brevet(s) | | Date de publication |
|---|---|---|---|---|---|
| EP 2787408 | A2 | 08-10-2014 | CA<br>CN<br>EP<br>US | 2843657 A1<br>104103200 A<br>2787408 A2<br>8831799 B1 | 04-10-2014<br>15-10-2014<br>08-10-2014<br>09-09-2014 |
| US 2013103233 | A1 | 25-04-2013 | CN<br>FR<br>US | 103064421 A<br>2981778 A1<br>2013103233 A1 | 24-04-2013<br>26-04-2013<br>25-04-2013 |
| US 8374736 | B1 | 12-02-2013 | AUCUN | | |
| FR 3023368 | A1 | 08-01-2016 | CN<br>FR<br>US | 105235911 A<br>3023368 A1<br>2016046386 A1 | 13-01-2016<br>08-01-2016<br>18-02-2016 |

EPO FORM P0460

Pour tout renseignement concernant cette annexe : voir Journal Officiel de l'Office européen des brevets, No.12/82